# EUROPÄISCHE PATENTSCHRIFT

(11) **EP 2 598 407 B1**
(45) Veröffentlichungstag und Bekanntmachung des Hinweises auf die Patenterteilung: **11.05.2016**
(21) Anmeldenummer: 11801555.1
(22) Anmeldetag: 26.07.2011
(51) Int. Cl.: B65D 23/10

(54) **VERFAHREN ZUR HERSTELLUNG VON BLASGEFORMTEN BEHÄLTERN SOWIE BLASGEFORMTER BEHÄLTER**
METHOD FOR PRODUCING BLOW-MOLDED CONTAINERS AND BLOW-MOLDED CONTAINER
PROCÉDÉ DE FABRICATION DE RÉCIPIENTS MOULÉS PAR SOUFFLAGE ET RÉCIPIENTS MOULÉS PAR SOUFFLAGE

(30) Priorität: 29.07.2010 DE 102010033377
(43) Veröffentlichungstag der Anmeldung: 05.06.2013
(73) Patentinhaber: KHS Corpoplast GmbH, 22145 Hamburg (DE)
(72) Erfinder: PASUTANON, Pisarn, 22145 Hamburg (DE); GERNHUBER, Matthias, 22527 Hamburg (DE); AMARIGLIO, Stefan, 22941 Hamburg (DE); WIESE, Arne, 22926 Ahrensburg (DE)
(74) Vertreter: Hausfeld, Norbert
(86) Internationale Anmeldenummer: PCT/DE2011/001537
(87) Internationale Veröffentlichungsnummer: WO 2012/013188

(56) Entgegenhaltungen:
- EP-A1- 0 324 305
- EP-A1- 2 050 677
- EP-A2- 0 322 651
- US-A1- 2001 037 992
- US-A1- 2010 163 515

## Beschreibung

Die Erfindung betrifft ein Verfahren zur Herstellung eines blasgeformten Behälters, der einen verschließbaren Mündungsabschnitt, eine Seitenwandung sowie einen verschlossenen Boden aufweist.

Die Erfindung betrifft darüber hinaus einen blasgeformten Behälter, der einen verschließbaren Mündungsabschnitt, eine Seitenwandung sowie einen verschlossenen Boden aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Derartige blasgeformte Behälter finden in vielfältigen Gestaltungen ihre Verwendung zur Verpackung von Produkten. Insbesondere werden stille oder karbonisierte Getränke in derartige Behälter abgefüllt. EP 0322 651 offenbart einen derartigen Behälter.
Ein wesentlicher Kostenfaktor bei der Herstellung der betreffenden Behälter ist das Gewicht des verwendeten Materials. Zum einen ist das Material relativ teuer, darüber hinaus ist eine Erwärmung des Materials vor der Blasverformung erforderlich, die einen entsprechenden Energieeinsatz zur Folge hat. Es wird deshalb fortlaufend versucht, den Materialeinsatz zu vermindern und die blasgeformten Behälter mit möglichst dünnen Wandungen auszubilden.

Die Verminderung der Wandstärke führt allerdings auch zu einer verminderten Stabilität der Behälter. Im Bereich der Seitenwandungen des Behälters werden deshalb spezielle Verrippungen eingesetzt. Auch im Bereich des Bodens des Behälters wird versucht, die Wandstärke zu vermindern.

Typischerweise sind im Bereich der Seitenwandung des Behälters unterschiedliche Anforderungen zu erfüllen. Einerseits benötigt der Behälter in einer Längsrichtung eine ausreichende Stabilität, um Kraftbelastungen beim Befüllen aufnehmen zu können. Andererseits verlangt der Verbraucher nach Griffmulden, um die Flasche sicher greifen und handhaben zu können. Entsprechende Griffmulden vermindern aber die Stabilität.

Aufgabe der vorliegenden Erfindung ist es daher, ein Verfahren der einleitend genannten Art derart zu verbessern, dass die Stabilität der Seitenwandungen der Behälter verbessert wird.

Diese Aufgabe wird erfindungsgemäß dadurch gelöst, dass ein spritzgegossener Vorformling temperiert und durch einen Blasvorgang derart zu einem Behälter umgeformt wird, dass das Material im Bereich der Seitenwandung derart durch den Blasformungsvorgang geformt wird, dass entlang eines Außenumfanges des Behälters mindestens drei Griffmulden angeordnet werden, zwischen denen jeweils mindestens zwei in einer Längsrichtung des Behälters orientierte Längsrippen geformt werden, die durch eine ebenfalls in Längsrichtung verlaufende Mulde voneinander getrennt sind und dass innerhalb jeder der Griffmulden mindestens eine Umfangsrippe angeordnet wird, die sich in einer Umfangsrichtung des Behälters erstreckt.

Weitere Aufgabe der vorliegenden Erfindung ist es, einen Behälter der einleitend genannten Art derart zu konstruieren, dass verbesserte Stabilitätseigenschaften bereitgestellt werden.

Diese Aufgabe wird erfindungsgemäß dadurch gelöst, dass das Material im Bereich der Seitenwandung durch Blasverformung eines spritzgegossenen Vorformlings derart geformt ist, dass entlang eines Außenumfanges des Behälters mindestens drei Griffmulden angeordnet sind, zwischen denen jeweils mindestens zwei in einer Längsrichtung des Behälters orientierte Längsrippen angeordnet sind, die durch eine ebenfalls in Längsrichtung verlaufende Mulde voneinander getrennt sind und dass innerhalb jeder der Griffmulden mindestens eine Umfangsrippe angeordnet ist, die sich in einer Umfangsrichtung des Behälters erstreckt.

Die Anordnung von mindestens drei Griffmulden entlang des Außenumfanges des Behälters unterstützt ein sicheres manuelles Ergreifen des Behälters bei beliebigen Positionierungen des Behälters relativ zu einem Benutzer. Die Anordnung der Längsrippen zwischen den Griffmulden stabilisiert den Behälter in einer Längsrichtung. Die Aufteilung auf mindestens zwei von einer Mulde getrennten Längsrippen verbessert nochmals die Stabilität. Die Anordnung der Längsrippen innerhalb der Griffmulden stabilisiert den Behälter gegenüber einer manuellen Verformung bei einem Ergreifen. Darüber hinaus wird auch die Konturstabilität bei einer Lagerung unterstützt.

Eine erhöhte Stabilität beim Ergreifen des Behälters wird dadurch erreicht, dass sich innerhalb der Griffmulde mindestens drei Umfangsrippen erstrecken, von denen mindestens eine in einer radialen Richtung des Behälters auf einem ahderen Niveau als mindestens eine andere der Umfangsrippen angeordnet wird.

Eine erhöhte Stabilität bei einem Ergreifen des Behälters wird dadurch erreicht, dass im Bereich einer in einer radialen Richtung innenliegenden Basis der Griffmulde drei Umfangsrippen übereinander angeordnet werden.

Eine weitere Erhöhung der mechanischen Belastbarkeit kann dadurch erreicht werden, dass die Basis der Griffmulde in einer Längsrichtung des Behälters sowohl in lotrechter Richtung nach oben als auch lotrechter Richtung nach unten durch mindestens zwei gestufte Umfangsrippen in den Bereich der Seitenwand des Behälters übergeleitet wird.

Ein guter Kompromiss zwischen einer blastechnischen Formbarkeit und einer hohen Stabilität wird dadurch erreicht, dass die die Längsrippen voneinander trennende Mulde in einer radialen Richtung des Behälters mit einer Tiefe versehen wird, die höchstens 50 Prozent der Ausdehnung der Längsrippen in der radialen Richtung des Behälters entspricht.

Eine funktionsgerechte Gestaltung wird dadurch erreicht, dass die Griffmulde in einer vertikalen Querschnittfläche mit einer trapezähnlichen Kontur versehen wird.

Eine hohe Stabilität bei von außen wirkenden Kräften wird dadurch erreicht, dass mindestens eine der Umfangsrippen in einer vertikalen Querschnittfläche mindestens abschnittweise kreissegmentartig begrenzt und in einer radialen Richtung nach außen gewölbt wird.

Eine gegenseitige Abstützung der Umfangsrippen wird dadurch erreicht, dass mindestens zwei benachbarte Umfangsrippen relativ zueinander mit einem winkligen Übergang geformt werden.

In den Zeichnungen sind Ausführungsbeispiele der Erfindung schematisch dargestellt. Es zeigen:
- Fig. 1: eine schematische Darstellung eines blasgeformten Behälters mit Griffmulden,
- Fig. 2: eine perspektivische Darstellung des Behälters gemäß Fig. 1,
- Fig. 3: einen Querschnitt gemäß Schnittlinie III-III in Fig. 1,
- Fig. 4: einen Querschnitt gemäß Schnittlinie IV-IV in Fig. 1,
- Fig. 5: einen Querschnitt entsprechend Fig. 4 mit zusätzlich eingetragenen Dimensionierungsbeispielen,
- Fig. 6: eine Seitenansicht von zwei Griffmulden,
- Fig. 7: eine teilweise Darstellung eines vergrößerten Längsschnittes,
- Fig. 8: eine Darstellung ähnlich zu Fig. 6 bei einer veränderten Blickrichtung,
- Fig. 9: einen Querschnitt gemäß Schnittlinie IX-IX in Fig. 8,
- Fig. 10: eine Darstellung ähnlich zu Fig. 8 mit Dimensionierungsangaben und
- Fig. 11: eine schematische Darstellung zur Veranschaulichung der Geometrie einer Griffmulde.

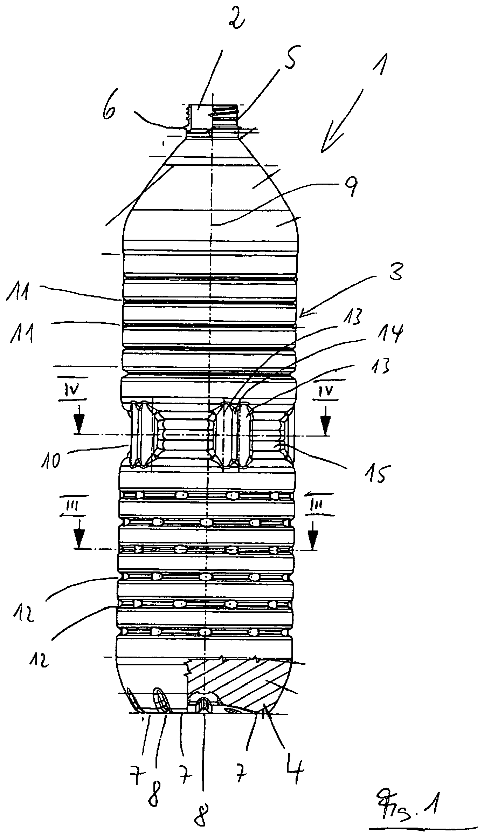

Figur 1 zeigt einen blasgeformten Behälter (1), der einen Mündungsabschnitt (2), Seitenwandungen (3) und einen Boden (4) aufweist. Der Mündungsabschnitt (2) ist mit einem Außengewinde (5) versehen und durch einen Stützring (6) von den Seitenwandungen (3) getrennt.

Im Bereich des Bodens (4) sind eine Mehrzahl von Standfüßen (7) angeordnet, zwischen denen sich jeweils Abstände (8) erstrecken. Der Behälter (1) erstreckt sich entlang einer Längsachse (9).

Entlang eines Außenumfanges des Behälters (1) sind eine Mehrzahl von Griffmulden (10) angeordnet. Insbesondere ist an eine Verwendung von mindestens drei Griffmulden (10) gedacht. Das Ausführungsbeispiel in Figur 1 zeigt die Verwendung von fünf Griffmulden (10). Gemäß dem Ausführungsbeispiel in Figur 1 sind die Griffmulden (10) in einem in Richtung der Längsachse (9) mittleren Bereich des Behälters (1) angeordnet. In einem in lotrechter Richtung oberhalb der Griffmulden (10) angeordneten Bereich des Behälters (1) befinden sich umlaufende Verrippungen (11). Ebenfalls sind umlaufende Verrippungen (12) in einem in lotrechter Richtung unterhalb der Griffmulden (10) angeordneten Bereich des Behälters (1) angeordnet. Die Verrippungen (11, 12) werden typischerweise als sich in Richtung auf einen Innenraum des Behälters (1) hineinerstreckende nutförmige Vertiefungen realisiert. Verwendbar sind aber auch ringartige Außenwölbungen. Darüber hinaus ist an die Verwendung nicht nur von umlaufenden Verrippungen (11, 12) gedacht, sondern diese können auch segmentiert realisiert werden.

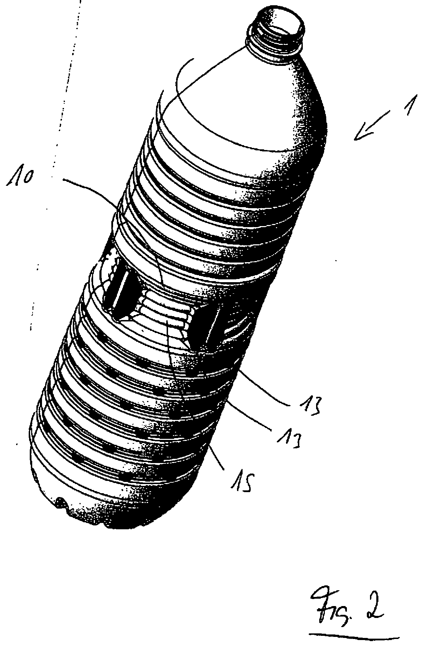

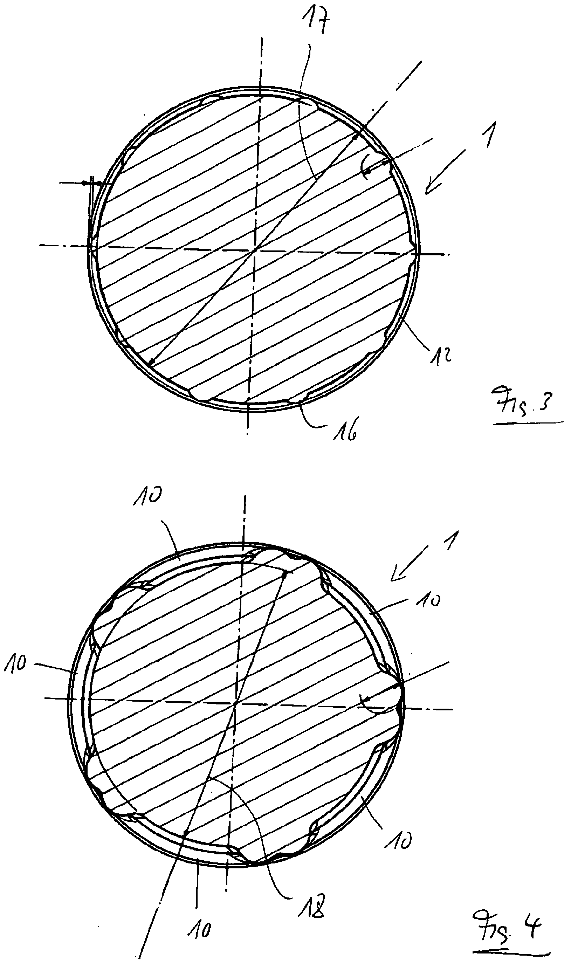

Zwischen den Griffmulden (10) sind jeweils Längsrippen (13) angeordnet. Gemäß dem Ausführungsbeispiel in Figur 1 befinden sich zwei Längsrippen (13) jeweils nebeneinander, die von einer Mulde (14) voneinander getrennt sind. Innerhalb der Griffmulden (10) ist jeweils mindestens eine Umfangsrippe (15) angeordnet. Figur 1 zeigt die Verwendung von fünf Umfangsrippen (15) in jeder der Griffmulden (10). Figur 2 veranschaulicht in einer perspektivischen Darstellung nochmals die Konstruktion des Behälters (1) gemäß Figur 1. Insbesondere ist die Anordnung der Umfangsrippen (15) innerhalb der Griffmulden (10) sowie die außenseitig vergleichsweise flache Ausbildung der Längsrippen (13) zu erkennen. Der Horizontalschnitt in Figur 3 veranschaulicht die Tiefe der Verrippungen (12). Insbesondere ist zu erkennen, dass innerhalb der Verrippungen (12) geringdimensionierten Außenwölbungen (16) angeordnet sind, die zum Einen die Stabilität vergrößern und darüber hinaus einem Betrachter eine tropfenartige Gestaltung vermitteln. Figur 4 zeigt in einem horizontalen Schnitt insbesondere die Tiefe der Griffmulden (10).

Für ein beispielhaftes Volumen des Behälters (1) von etwa 1,5 Litern beträgt ein Gewicht etwa 18 Gramm. Bei einer derartigen Größe des Behälters (1) beträgt ein Durchmesser (17) in Figur 3 etwa 82,8 Millimeter und ein Durchmesser (18) in Figur 4 etwa 76,3 Millimeter.

Hinsichtlich des als Flasche ausgebildeten Behälters (1) in Figur 1 beträgt die Ausdehnung in Richtung der Längsachse (9) etwa 309 Millimeter. Die oberen Verrippungen (11) strecken sich über einen Bereich von etwa 60 Millimeter. Figur 1 zeigt die Verwendung von fünf Verrippungen (11). Die Verrippungen (12) erstrecken sich über einen Bereich von etwa 80 Millimeter. Das Ausführungsbeispiel zeigt die Verwendung von sechs Verrippungen (12).

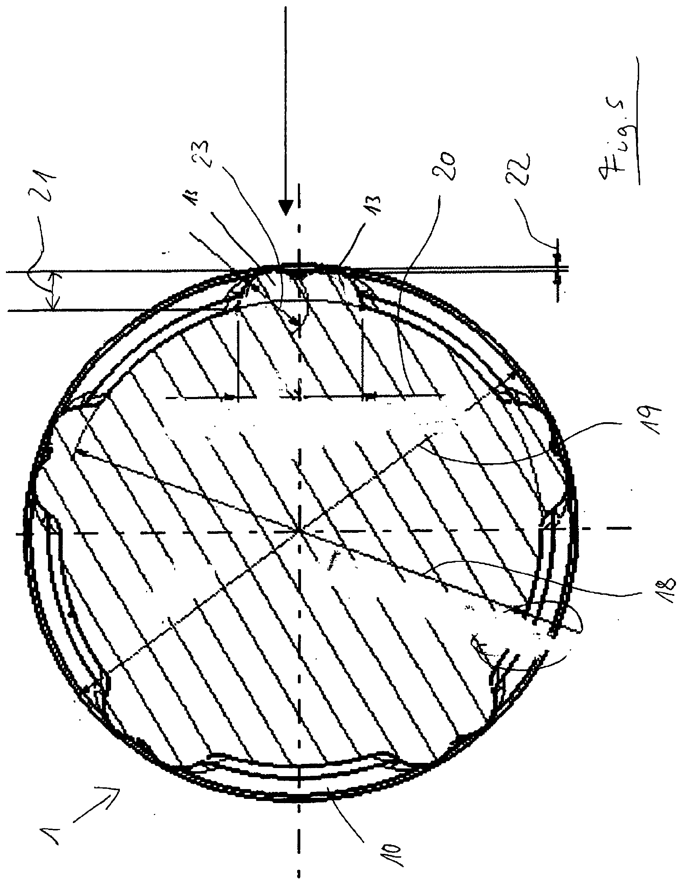

Figur 5 veranschaulicht einen Horizontalschnitt ähnlich zu Figur 4 mit zusätzlich eingezeichneten Bemaßungen. Der Durchmesser (18) beträgt etwa 85 Prozent des Außendurchmessers (19). Typischerweise beträgt der Durchmesser (18) etwa 75 Prozent bis 95 Prozent des Außendurchmessers (19).

Die Kombination aus den Längsrippen (13) und der Mulde (14) verläuft in einer Umfangsrichtung des Behälters (1) über einen Bereich von etwa 20 Millimeter. Typischerweise beträgt die Breite (20) etwa 15 bis 25 Millimeter. In einer parallel zur radialen Richtung des Behälters (1) verlaufenden Richtung beträgt eine maximale Ausdehnung der Längsrippen (13) etwa ein Viertel der Differenz zwischen den Durchmessern (17) und (18). Die Werte liegen in einem Bereich von 0,05 bis 0,5 multipliziert mit der Differenz zwischen den Durchmessern (17) und (18).

Eine Tiefe (22) der Mulde (14) gemessen ausgehend von einer maximalen Ausdehnung der Längsrippen (13) beträgt etwa 2,5 Millimeter. Ein typischer Bereich erstreckt sich von 0,5 bis 5,0 Millimeter.

Die Längsrippen (13) weisen zumindest abschnittweise eine Querschnittfläche ähnlich zu einem Teil einer Kreisfläche auf. Ein Durchmesser (23) eines entsprechenden Kreises beträgt etwa 55 Prozent der Breite (20). Typisch für den Durch-messer (23) ist ein Bereich von 40 Prozent bis 70 Prozent der Breite (20).

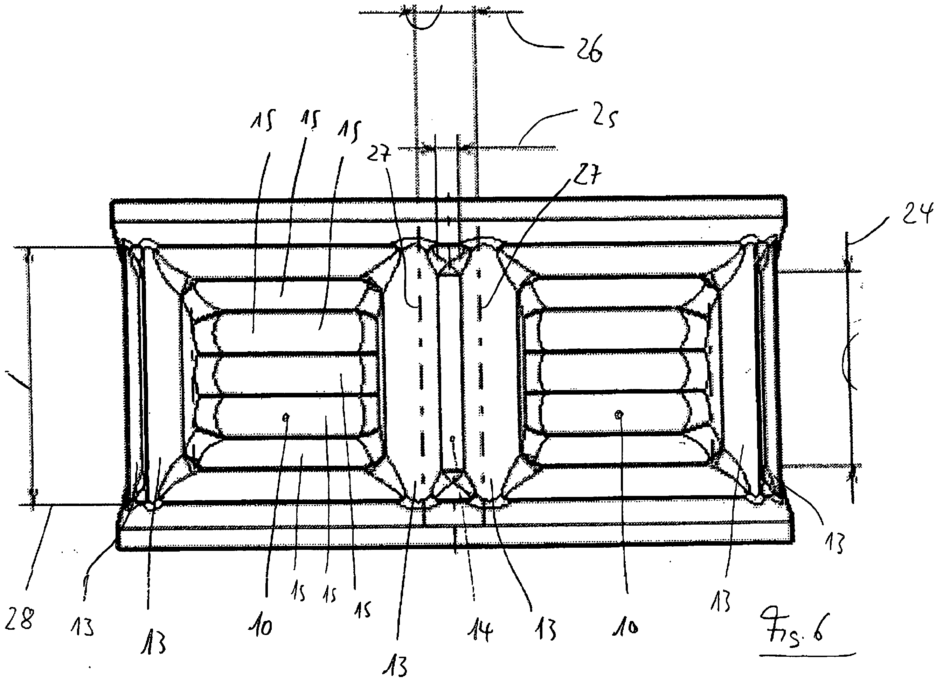

Figur 6 veranschaulicht weitere beispielhafte Dimensionierungen. Eine Höhe (24) der Griffmulden (10) beträgt etwa 24 Millimeter. Typisch ist für die Höhe (24) ein Bereich von 5 bis 32 Millimeter.

Eine Breite (25) der Mulde (14) beträgt etwa 2 Millimeter. Typisch ist für die Breite (25) ein Bereich von 1 bis 8 Millimeter.

Ein Abstand (26) von Scheitellinien (27) der Längsrippen (13) beträgt etwa 8 Millimeter. Typisch ist für den Abstand (26) ein Bereich von 6 bis 12 Millimeter. Die Scheitellinien (27) definieren die maximal in einer radialen Richtung nach außen reichende Erstreckung der Längsrippen (13).

Eine Außenhöhe (28) der Griffmulden (13) beträgt etwa das 5,3-fache der in Figur 5 eingezeichneten Ausdehnung (21).

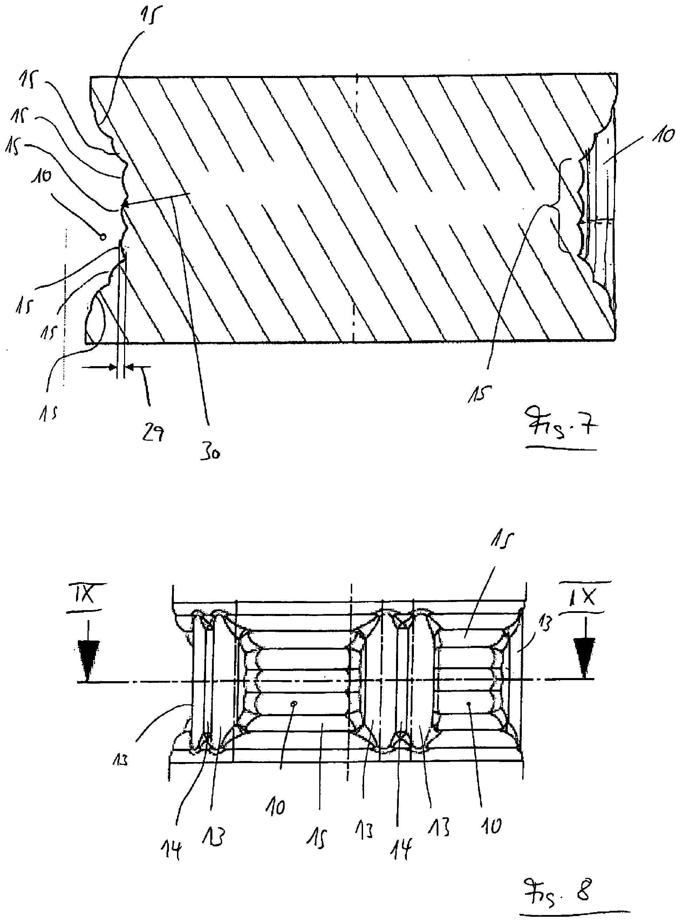

Figur 7 veranschaulicht in einer weiteren schematischen Querschnittdarstellung die rippenartige Kontur der Griffmulden (10). Zu erkennen ist im dargestellten Vertikalschnitt eine trapezartige Querschnittfläche der Griffmulden (10). Im Bereich eines Bodens der Griffmulden (10) angeordnete Umfangsrippen (15) weisen eine Höhe (29) von etwa 1 bis 2 Millimeter auf. Bevorzugt ist eine Höhe (29) von etwa 1 Millimeter. Ein Wölbungsradius (30) dieser Umfangsrippen (15) beträgt etwa 4 Millimeter. Typisch für den Radius (30) ist ein Bereich von 3 bis 5 Millimeter. Das Ausführungsbeispiel gemäß Figur 7 zeigt im Bereich des Bodens der Griffmulde (10) drei nebeneinander angeordnete Umfangsrippen (15), die mit ihrem jeweiligen Scheitelpunkt in einer gemeinsamen Ebene angeordnet sind.

Die Darstellung in Figur 8 zeigt den im Wesentlichen gleichen Bereich des Behälters (1) wie die Darstellung in Figur 6, jedoch in einer leicht um die Längsachse herum weitergedrehten Position des Behälters (1).

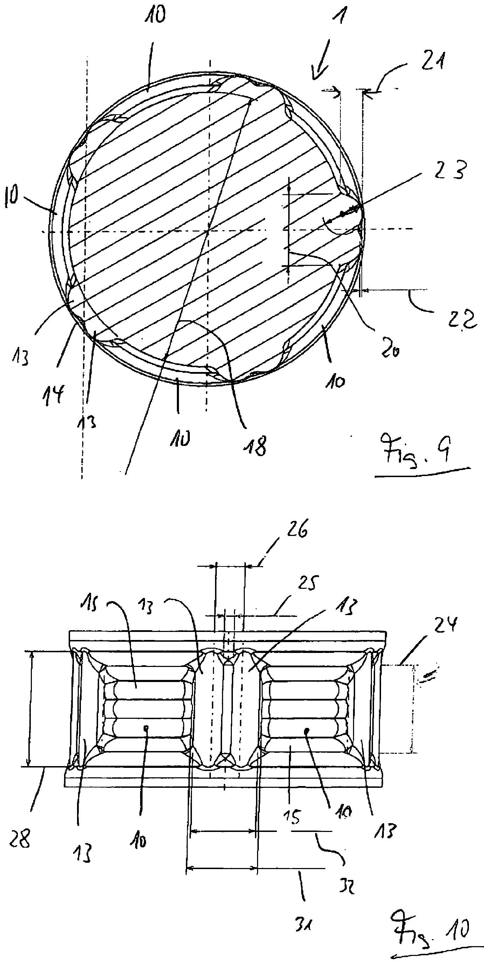

Figur 9 zeigt einen Horizontalschnitt ähnlich zu Figur 4 jedoch mit zusätzlichen Dimensionierungsangaben. Als Spezialfall zu den allgemeinen Dimensionierungsangaben zu Figur 5 beträgt hier der Durchmesser (18) etwa 76,3 Millimeter, die Breite (20) beträgt etwa 19,8 Millimeter, die Ausdehnung (21) etwa 6,13 Millimeter, die Tiefe (22) etwa 0,66 Millimeter und der Durchmesser (23) etwa 11 Millimeter.

Figur 10 entspricht im Wesentlichen der Darstellung in Figur 6 mit den folgenden beispielhaften konkreten Dimensionierungsangaben. Die Höhe (24) beträgt etwa 24,8 Millimeter, die Breite (25) etwa 2,85 Millimeter, der Abstand (26) etwa 8,0 Millimeter und die Außenhöhe (28) etwa 32,3 Millimeter. Zusätzlich eingezeichnet sind hinsichtlich der Kombination aus zwei Längsrippen (13) und der Mulde (14) eine Außenbreite (31) von etwa 19,4 Millimeter und eine Innenbreite (32) von etwa 17,9 Millimeter.

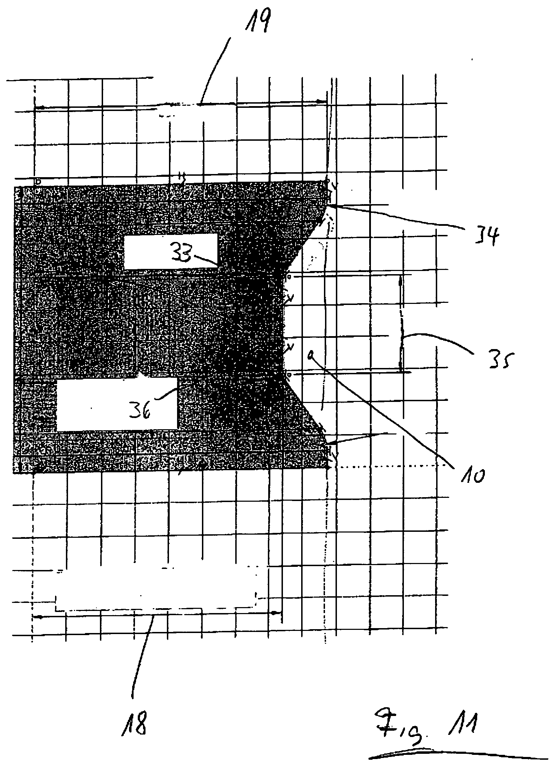

Figur 11 veranschaulicht in einer stark schematisierten Darstellung die Griffmulde (10) ohne konkrete Darstellung der Umfangsrippen (15) und der Längsrippen (13).

Als Bezugsgrößen sind in Figur 11 nochmals die Durchmesser (18, 19) eingetragen. Ein Übergangsradius zwischen einer Basis der Griffmulde (10) und den schrägen Seitenwandungen beträgt etwa 1 bis 5 Millimeter. Bevorzugt ist etwa 1 Millimeter. Ein Radius im Übergangsbereich zwischen den schrägen Seitenwandungen der Griffmulden (10) und dem vertikalen Bereich der Wandung des Behälters (1) beträgt etwa 6 Millimeter. Anwendbar für den Radius (34) ist ein Bereich von 2 bis 15 Millimeter.

Eine Basishöhe (35) der Basis der Griffmulde (10) beträgt etwa 15 Millimeter. Anwendbar für die Basishöhe (35) ist ein Bereich von 10 bis 25 Millimeter. Ein Winkel zwischen dem vertikalen Verlauf der Seitenwandung des Behälters (1) und der schrägen Seitenwandung der Griffmulde (10) beträgt etwa 35 Grad. Anwendbar für den Winkel (36) ist ein Bereich von 25 Grad bis 45 Grad.

## Patentansprüche

1. Verfahren zur Herstellung eines blasgeformten Behälters (1), der einen verschliessbaren Mündungsabschnitt (2), eine Seitenwandung (3) sowie einen verschlossenen Boden (4) aufweist, **dadurch gekennzeichnet, dass** ein spritzgegossener Vorformling temperiert und durch einen Blasvorgang derart zu einem Behälter (1) umgeformt wird, dass das Material im Bereich der Seitenwandung (3) derart durch den Blasformungsvorgang geformt wird, dass entlang eines Aussenumfanges des Behälters (1) mindestens drei Griffmulden (10) angeordnet werden, zwischen denen jeweils mindestens zwei in einer Längsrichtung des Behälters (1) orientierte Längsrippen (13) geformt werden, die durch eine ebenfalls in Längsrichtung verlaufende Mulde (14) voneinander getrennt sind und dass innerhalb jeder der Griffmulden (10) mindestens eine Umfangsrippe (15) angeordnet wird, die sich in einer Umfangsrichtung des Behälters (1) erstreckt, wobei die Basis der Griffmulde (10) in einer Längsrichtung des Behälters (1) sowohl in lotrechter Richtung nach oben als auch lotrechter Richtung nach unten durch mindestens zwei gestufte Umfangsrippen (15) in den Bereich der Seitenwand des Behälters (1) übergeleitet wird..

2. Verfahren nach Anspruch 1, **dadurch gekennzeichnet, dass** sich innerhalb der Griffmulde (10) mindestens drei Umfangsrippen (15) erstrecken, von denen mindestens eine in einer radialen Richtung des Behälters (1) auf einem anderen Niveau als mindestens eine andere der Umfangsrippen (15) angeordnet wird.

3. Verfahren nach Anspruch 1 oder 2 , **dadurch gekennzeichnet, dass** im Bereich einer in einer radialen Richtung innenliegenden Basis der Griffmulde (10) drei Umfangsrippen (15) übereinander angeordnet werden.

4. Verfahren nach einem der Ansprüche 1 bis 3, **dadurch gekennzeichnet, dass** die die Längsrippen (13) voneinander trennende Mulde (14) in einer radialen Richtung des Behälters (1) mit einer Tiefe versehen wird, die höchstens 50 Prozent der Ausdehnung der Längsrippen (13) in der radialen Richtung des Behälters (1) entspricht.

5. Verfahren nach einem der Ansprüche 1 bis 4, **dadurch gekennzeichnet, dass** die Griffmulde (10) in einer vertikalen Querschnittfläche mit einer trapezähnlichen Kontur versehen wird.

6. Verfahren nach einem der Ansprüche 1 bis 5, **dadurch gekennzeichnet, dass** mindestens eine der Umfangsrippen (15) in einer vertikalen Querschnittfläche mindestens abschnittweise kreissegmentartig begrenzt und in einer radialen Richtung nach aussen gewölbt wird.

7. Verfahren nach einem der Ansprüche 1 bis 6, **dadurch gekennzeichnet, dass** mindestens zwei benachbarte Umfangsrippen (15) relativ zueinander mit einem winkligen Übergang geformt werden.

8. Blasgeformter Behälter (1), der einen verschliessbaren Mündungsabschnitt (2), eine Seitenwandung (3) sowie einen verschlossenen Boden (4) aufweist, **dadurch gekennzeichnet, dass** das Material im Bereich der Seitenwandung (3) durch Blasverformung eines spritzgegossenen Vorformlings derart geformt ist, dass entlang eines Aussenumfanges des Behälters (1) mindestens drei Griffmulden (10) angeordnet sind, zwischen denen jeweils mindestens zwei in einer Längsrichtung des Behälters (1) orientierte Längsrippen (13) angeordnet sind, die durch eine ebenfalls in Längsrichtung verlaufende Mulde (14) voneinander getrennt sind und dass innerhalb jeder der Griffmulden (10) mindestens eine Umfangsrippe angeordnet ist, die sich in einer Umfangsrichtung des Behälters (1) erstreckt, wobei die Basis der Griffmulde (10) gestuft sowohl in einer vertikalen Richtung nach oben als auch in einer vertikalen Richtung nach unten von jeweils mindestens zwei Umfangsrippen (15) in die Seitenwandung (3) des Behälters (1) übergeleitet ist.

9. Behälter nach Anspruch 8, **dadurch gekennzeichnet, dass** die Griffmulde (10) mindestens drei Umfangsrippen (15) aufweist, von denen mindestens eine Umfangsrippe (15) in einer radialen Richtung des Behälters (1) auf einem anderen Niveau als mindestens eine weitere der Umfangsrippen (15) angeordnet ist.

10. Behälter nach Anspruch 8 oder 9, **dadurch gekennzeichnet, dass** im Bereich einer in einer radialen Richtung des Behälters (1) innenliegenden Basis der Griffmulde (10) mindestens drei Umfangrippen (15) in einer vertikalen Richtung übereinander angeordnet sind.

11. Behälter nach einem der Ansprüche 8 bis 10, **dadurch gekennzeichnet, dass** die die Längsrippen (13) voneinander trennende Mulde (14) in radialen Richtung des Behälters (1) eine Tiefe aufweist, die höchstens 50 Prozent der Ausdehnung der Längsrippen (13) in der radialen Richtung des Behälters (1) entspricht.

12. Behälter nach einem der Ansprüche 8 bis 11, **dadurch gekennzeichnet, dass** die Griffmulde (14) in einer vertikalen Querschnittfläche eine trapezähnliche Kontur aufweist.

13. Behälter nach einem der Ansprüche 8 bis 12, **dadurch gekennzeichnet, dass** mindestens eine der Umfangsrippen (15) in einer vertikalen Querschnittfläche mindestens abschnittweise kreissegmentartig begrenzt und in einer radialen Richtung des Behälters (1} nach aussen gewölbt gebildet ist.

14. Behälter nach einem der Ansprüche 8 bis 13, **dadurch gekennzeichnet, dass** mindestens zwei Umfangsrippen (15) winklig gegeneinander grenzen.

## Claims

1. A method for producing a blow-moulded container (1), which comprises an opening section (2) that can be closed, a side wall (3), as well as a closed bottom (4), **characterised in that** an injection-moulded preform is tempered and is formed by means of a blow-moulding process into a container (1) in such a manner that the material in the region of the side wall (3) is moulded by means of the blow-moulding process in such a manner that at least three recessed grips (10), between which at least two respective longitudinal ribs (13) are moulded, which are oriented in a longitudinal direction of the container (1) and which are separated from one another by means of a recess (14), which also extends in a longitudinal direction, are arranged along an outer circumference of the container (1), and that at least one circumferential rib (15), which extends in a circumferential direction of the container (1), is arranged inside each of the recessed grips (10), wherein the base of the recessed grip (10) is transferred into the region of the side wall of the container (1) in a longitudinal direction of the container (1), both in vertical direction to the top as well as in vertical direction to the bottom by means of at least two stepped circumferential ribs (15).

2. The method according to claim 1, **characterised in that** at least three circumferential ribs (15), at least one of which is arranged in a radial direction of the container (1) at a different level than at least one other one of the circumferential ribs (15), extend inside the recessed grip (10).

3. The method according to claim 1 or 2, **characterised in that** three circumferential ribs (15) are arranged on top of one another in the region of a base of the recessed grip (10) located on the inside in radial direction.

4. The method according to any one of claims 1 to 3, **characterised in that**, in a radial direction of the container (1), the recess (14), which separates the longitudinal ribs (13) from one another, is provided with a depth, which corresponds to maximally 50 percent of the expansion of the longitudinal ribs (13) in the radial direction of the container (1).

5. The method according to any one of claims 1 to 4, **characterised in that**, in a vertical cross sectional surface, the recessed grip (10) is provided with a trapezoid-like contour.

6. The method according to any one of claims 1 to 5, **characterised in that** at least one of the circumferential ribs (15) is defined in the manner of a segment of a circle in sections in a vertical cross sectional surface and is bent outwards in a radial direction.

7. The method according to any one of claims 1 to 6, **characterised in that** at least two adjacent circumferential ribs (15) are formed relative to one another with an angled transition.

8. A blow-moulded container (1), which has an opening section (2) that can be closed, a side wall (3), as well as a closed bottom (4), **characterised in that** the material in the region of the side wall (3) is formed by means of blow-forming of an injection-moulded preform in such a manner that at least three recessed grips (10), between which at least two respective longitudinal ribs (13) are arranged, which are oriented in a longitudinal direction of the container (1) and which are separated from one another by means of a recess (14), which also extends in a longitudinal direction, are arranged along an outer circumference of the container (1), and that at least one circumferential rib, which extends in a circumferential direction of the container (1), is arranged inside each of the recessed grips (10), wherein the base of the recessed grip (10) is transferred into the side wall (3) of the container (1) in a stepped manner as well as in a vertical direction to the top as well as in a vertical direction to the bottom by at least two respective circumferential ribs (15).

9. The container according to claim 8, **characterised in that** the recessed grip (10) has at least three circumferential ribs (15), at least one circumferential rib (15) of which is arranged in a radial direction of the container (1) at a different level than at least one further one of the circumferential ribs (15).

10. The container according to claim 8 or 9, **characterised in that** at least three circumferential ribs (15) are arranged on top of one another in a vertical direction in the region of a base of the recessed grip (10) located on the inside in a radial direction of the container (1).

11. The container according to any one of claims 8 to 10, **characterised in that** the recess (14), which separates the longitudinal ribs (13) from one another, has a depth in radial direction of the container (1), which corresponds to maximally 50 percent of the expansion of the longitudinal ribs (13) in the radial direction of the container (1).

12. The container according to any one of claims 8 to 11, **characterised in that**, in a vertical cross sectional surface, the recessed grip (10) has a trapezoid-like contour.

13. The container according to any one of claims 8 to 12, **characterised in that** at least one of the circumferential ribs (15) is defined in the manner of a segment of a circle in sections in a vertical cross sectional surface and is shaped so as to be bent outwards in a radial direction of the container (1).

14. The container according to any one of claims 8 to 13, **characterised in that** at least two circumferential ribs (15) adjoin one another in an angled manner.

## Revendications

1. Procédé de fabrication d'un récipient (1) moulé par soufflage présentant une section d'embouchure (2) pouvant être obturée, une paroi latérale (3) ainsi qu'un fond (4) fermé, **caractérisé en ce qu**'une préforme moulée par injection est tempérée et transformée par un processus de soufflage en un récipient (1) de façon à ce qu'au niveau de la paroi latérale (3) le processus de moulage par soufflage donne au matériau une forme telle que l'on ait, le long d'une circonférence extérieure du récipient (1), un agencement d'au moins trois concavités de préhension (10) entre lesquelles sont respectivement formées au moins deux nervures longitudinales (13) orientées dans le sens longitudinal du récipient (1), lesquelles sont séparées l'une de l'autre par un creux (14) également longitudinal, et en ce qu'est agencée dans chaque concavités de préhension (10) au moins une nervure circonférentielle (15) s'étendant le long d'une circonférence du récipient (1), la transition verticale aussi bien vers le haut que vers le bas entre la base de la concavité de préhension (10) et la paroi latérale du récipient (1) dans le sens longitudinal de celui-ci étant assurée par au moins deux nervures circonférentielles (15) étagées.

2. Procédé selon la revendication 1, **caractérisé en ce que,** dans la concavité de préhension (10), s'étendent au moins trois nervures circonférentielles (15) dont l'une au moins est, dans un sens radial du récipient (1), agencée sur un autre niveau que l'une au moins des autres nervures circonférentielles (15).

3. Procédé selon la revendication 1 ou 2, **caractérisé en ce que,** dans la zone d'une base de la concavité de préhension (10) intérieure dans le sens radial, trois nervures circonférentielles (15) sont agencées l'une au-dessus de l'autre.

4. Procédé selon l'une des revendications 1 à 3, **caractérisé en ce que** le creux (14) séparant les nervures longitudinales (13) a, en sens radial du récipient (1), une profondeur correspondant à au maximum 50 pour cent de l'extension en sens radial du récipient (1) des nervures longitudinales (13).

5. Procédé selon l'une des revendications 1 à 4, **caractérisé en ce que,** dans un plan de section transversale vertical, la concavité de préhension (10) a un contour de type trapézoïdal.

6. Procédé selon l'une des revendications 1 à 5, **caractérisé en ce que,** dans un plan de section transversale vertical, l'une au moins des nervures circonférentielles (15) est limitée sur une partie au moins de son étendue par une délimitation en forme de segment de cercle et est, en sens radial, bombée vers l'extérieur.

7. Procédé selon l'une des revendications 1 à 6, **caractérisé en ce qu**'au moins deux nervures circonférentielles (15) voisines sont formées avec une transition anguleuse entre elles.

8. Récipient (1) moulé par soufflage présentant une section d'embouchure (2) pouvant être obturée, une paroi latérale (3) ainsi qu'un fond (4) fermé, **caractérisé en ce que,** au niveau de la paroi latérale (3), le moulage par soufflage d'une préforme moulée par injection donne au matériau une forme telle que l'on ait, le long d'une circonférence extérieure du récipient (1), un agencement d'au moins trois concavités de préhension (10) entre lesquelles sont respectivement agencées au moins deux nervures longitudinales (13) orientées dans le sens longitudinal du récipient (1), lesquelles sont séparées l'une de l'autre par un creux (14) également longitudinal, et **en ce qu'**est agencée dans chaque concavités de préhension (10) au moins une nervure circonférentielle (15) s'étendant le long d'une circonférence du récipient (1), la transition verticale aussi bien vers le haut que vers le bas entre la base de la concavité de préhension (10) et la paroi latérale du récipient (1) étant étagée sur au moins deux nervures circonférentielles (15).

9. Récipient selon la revendication 8, **caractérisé en ce que** la concavité de préhension (10) présente au moins trois nervures circonférentielles (15) dont l'une au moins est, dans un sens radial du récipient (1), agencée sur un autre niveau que l'une au moins des autres nervures circonférentielles (15).

10. Récipient selon la revendication 8 ou 9, **caractérisé en ce que,** dans la zone d'une base de la concavité de préhension (10) intérieure dans le sens radial du récipient (1), au moins trois nervures circonférentielles (15) sont agencées l'une au-dessus de l'autre en sens vertical.

11. Récipient selon l'une des revendications 8 à 10, **caractérisé en ce que** le creux (14) séparant les nervures longitudinales (13) présente, en sens radial du récipient (1), une profondeur correspondant à au maximum 50 pour cent de l'extension en sens radial du récipient (1) des nervures longitudinales (13).

12. Récipient selon l'une des revendications 8 à 11, **caractérisé en ce que,** dans un plan de section transversale vertical, la concavité de préhension (14) présente un contour de type trapézoïdal.

13. Récipient selon l'une des revendications 8 à 12, **caractérisé en ce que** dans un plan de section transversale vertical, l'une au moins des nervures circonférentielles (15) est limitée sur une partie au moins de son étendue par une délimitation en forme de segment de cercle et est, en sens radial du récipient (1), bombée vers l'extérieur.

14. Récipient selon l'une des revendications 8 à 13, **caractérisé en ce qu**'au moins deux nervures circonférentielles (15) voisines forment un angle entre elles.
